Europäisches Patentamt

European Patent Office

Office européen des brevets

(11) Veröffentlichungsnummer: **0 195 826**
**A1**

(12) **EUROPÄISCHE PATENTANMELDUNG**

(21) Anmeldenummer: **85101948.9**

(22) Anmeldetag: **22.02.85**

(51) Int. Cl.⁴: **B 01 F 1/00,** B 01 D 21/24,
B 01 D 21/26

(43) Veröffentlichungstag der Anmeldung: **01.10.86**
**Patentblatt 86/40**

(84) Benannte Vertragsstaaten: **AT FR GB**

(71) Anmelder: **VLT Gesellschaft für verfahrenstechnische
Entwicklung mbH, Augsburger Strasse 708,
D-7000 Stuttgart 61 (DE)**

(72) Erfinder: **Schreiber, Georg, Dipl.-Ing., Kiefernweg 7,
D-5000 Köln 50 (DE)**

(54) **Mischer-, Absetzer-Vorrichtung od. dgl. für partikelhaltige Flüssigkeiten.**

(57) Die Vorrichtung dient zum Beispiel zum Austragen von
Suspensionen aus Behältern. Die Zyklokammer ist direkt
am Behälterboden befestigt, die Suspension wird axial in
die Kammer eingeleitet, in der ein zentrales Rohr angeordnet ist. Die notwendige Energie wird durch tangential eingeleiteten und evtl. schräg nach unten gerichteten Fluidstrahl
über einen Teil oder über die gesamte Rohrbreite eingebracht. Der Flüssigkeitsstrom, der dem zentralen Rohr entnommen wird, wird geteilt in einen Teilstrom, der in die
Zyklokammer eingeleitet wird, wodurch die Trennschärfe
und Leistung geregelt wird, und in einen Teilstrom, der
abgeführt wird, wodurch die Partikelkonzentration im Apex
geregelt wird. Oberhalb des Austrages kann im Behälter
zum Unterdrücken der Auswirkung der im Behälter vorhandenen Rührtrombe ein konkaver Kegel angeordnet werden.
Die spiralförmige Strömung am Behälterboden sorgt für das
Austragen der Suspension zum Bodenausgang. Die Austragsvorrichtung besitzt keine mechanisch bewegten Teile.

0195826

Köln, den 17.11.1983
V.L.T.
Verfahrenstechnische Laboratorien und Technika
Dipl.-Ing. Georg Schreiber

Mischer-, Absetzer-Vorrichtung o.dgl.
für partikelhaltige Flüssigkeiten

Die Erfindung betrifft eine Mischer-, Absetzer-Vorrichtung o.dgl. für partikelhaltige Flüssigkeiten der im Oberbegriff des Patentanspruches 1 bezeichneten Art.

Das Entleeren von partikelhaltigen Flüssigkeiten oder Suspensionen aus Mischern, Absetzern, Kolonnen o.dgl. ist häufig mit Schwierigkeiten, wie Verstopfungen, Undichtigkeiten, Werkstoffabrasion, verbunden, insbesondere dann, wenn eine erhöhte Partikelkonzentration, bezogen auf die mittlere Partikelkonzentration, im Mischer, Absetzer o.dgl. abgezogen werden soll.

Soll im Austrag des Mischers, Absetzers o.dgl. eine höhere Partikelkonzentration als im Apparat selbst realisiert werden, dann muß im Mischer-, Absetzer- o.dgl. behälter ein Sedimentationsvorgang unter solchen Bedingungen ablaufen, daß keine Ablagerungen am Behälterboden und keine Verstopfungen auftreten, oder es muß bei voller Fluidisie-

Ü195826

rung des Behälterinhalts eine der bekannten Aufkonzentrierungsvorrichtungen eingesetzt werden, die entweder am Behälterstutzen \befestigt/ oder separat nachgeschaltet sein können. Der in einer solchen Aufkonzentrierungsvorrichtung ablaufende Trennvorgang kann in bekannter Weise durch Schwerkraft-Sedimentation bewirkt oder in Zentrifugen oder Hydrozyklonen durch Zentrifugalkraft oder mittels geeigneter Filtriervorrichtungen ausgeführt werden.

Rührerlose Absetzer mit einem Überlauf für die geklärte Flüssigkeit und einem einfachen hohlkegelartigen Austrag am Behälterboden müssen sorgfältig auf das jeweilige System ausgelegt werden, damit nicht die jeweilige Grenzkonzentration der Partikel im Überlaufstrom überschritten wird bzw. damit keine übermäßigen Konzentrationsschwankungen im Überlaufstrom auftreten.

Bei gerührten Mischern oder Absetzern ist eine Aufkonzentrierung nur begrenzt möglich, da sich der Querschnitt des Bodenteils in Strömungsrichtung stark verkleinert. Es besteht die Gefahr einer ungenügenden Leistung der Abzugsvorrichtung oder auch einer Verstopfung mit entsprechendem Anstieg der Partikelkonzentration im Behälter auf zu hohe Werte.

Daher werden für derartige Aufgaben Abzugsvorrichtungen mit mechanischem Partikeltransport eingesetzt, z.B. mittels einer Transportschnecke im Austragskegel oder einer Transportschnecke am Boden des Austrags.

Als nachgeschaltete Aufkonzentrierungsapparate, insbesondere für die hier in Betracht gezogenen Fest-Flüssig-Systeme, werden üblicherweise Zentrifugen, Hydrozyklone oder Filter unter Vorschaltung einer Pumpe eingesetzt.

Hierbei wird das zu behandelnde System in den Mischer, Absetzer, die Kolonne o.dgl. eingesetzt und die partikelhaltige Flüssigkeit über die Pumpe der Zentrifuge, dem Hydrozyklon oder dem Filter zugeführt. In diesen Apparaten findet eine Auftrennung in eine mit Partikeln angereicherte Phase und ein Filtrat statt, das teilweise als Rücklauf zurückgeführt wird.

Der Erfindung liegt die Aufgabe zugrunde, bei Mischer-, Absetzer-Vorrichtungen o.dgl. der eingangs angegebenen Art die Verstopfungsgefahr am Bodenteil und in der Abzugsvorrichtung ohne Anwendung mechanisch bewegter Teile wie Schnecken o.dgl. zu verringern.

Die gestellte Aufgabe wird durch die im kennzeichnenden Teil von Patentanspruch 1 angegebenen Merkmale gelöst. Weitere vorteilhafte Ausgestaltungen ergeben sich aus den Unteransprüchen.

Die vorliegende Austragsvorrichtung für partikelhaltige Flüssigkeiten ist ein sich an den vertikalen zylindrischen Teil 1 der Vorrichtung anschließender vertikaler trichterartiger Bodenteil oder Konus 2, der mittels Verschweißung, Flanschverbindung o.dgl. an dem unteren Ende des zylindrischen Teils 1 verbunden ist, mit einem axialen Tauchrohr 3 mit Ansaugöffnung, das in einen horizontal angeordneten aus der Vorrichtung herausgeführten Seitenabzug 4 übergeht. Über eine Pumpe und mindestens eine Zuleitung 6 in die Vorrichtung wird die Wiedereinleitung eines tangentialen und schräg nach unten gerichteten Kreislauf-Flüssigkeitsstrahlstromes in den Bodenteil oder Konus 2 bewirkt. Die Austragsvorrichtung kann aber auch aus einem zylindrischen Zwischenstück mit gegenüber dem zylindrischen Teil reduziertem Durchmesser oder Stutzen, die vom Behälterboden abgehen, und dem

0195826

sich nach unten anschließenden Konus 2 und einer Entleerungsleitung 8 gebildet sein.

Mit der vorgeschlagenen Vorrichtung ist die Steuerung der gewünschten Partikelkonzentration und der Ablaufleistung in sehr breiten Grenzen möglich. Wesentlich vermindert ist auch die Gefahr von Ablagerungen von Partikeln am Behälterboden.

Ein zylindrischer Mischbehälter mit einem konischen Abschnitt am Boden und tangentialer Einleitung mindestens eines Kreislauf-Flüssigkeitsstrahlstromes mittels einer Pumpe zwecks Erzeugung einer Wirbelströmung um die Längsachse des Behälters am Boden des konischen Abschnittes zur Verhinderung des Absetzens von Feststoffteilchen ist aus der japanischen Patentveröffentlichung J 5 7071-628 bekanntgeworden. Diese beschriebene Vorrichtung dient dem gleichmäßigen Vermischen des Behälterinhaltes und weist einen seitlichen Abzug der behandelten partikelhaltigen Flüssigkeit auf. Sie weist nicht das für die vorliegende Vorrichtung charakteristische in das trichterartige Bodenteil (Konus) ragende Tauchrohr 3 und die tangential und schräg nach unten gerichtete mindestens eine Zuleitung 6 zurück zum Behälter auf.

Die für die Aufrechterhaltung eines nicht sedimentierten Zustandes in den konisch nach unten zulaufenden Bodenteil 2 erforderliche Energie wird durch die von der Pumpe geleistete Arbeit mittels der tangential und schräg nach unten eingeleiteten Kreislauf-Flüssigkeitsstrahlströme aufgebracht. Diese Kreislauf-Flüssigkeitsstrahlströme werden über die Pumpe dem zentralen in das Bodenteil (Konus) 2 ragenden Tauchrohr 3 entnommen.

Die tangential und schräg nach unten eingeleiteten Flüssigkeitsstrahlströme können aber auch teilweise aus anderen Rückführungs- bzw. Rücklaufleitungen gespeist bzw. als Fremdflüssigkeit zugeführt werden.

Die über die mindestens eine Leitung 6 eingeleiteten Flüssigkeitsstrahlströme weisen jeweils eine tangentiale und eine axiale Komponente auf. Dadurch wird in dem nach oben offenen trichterartigen Bodenteil (Konus) 2 eine Wirbelströmung um die vertikale Achse der Vorrichtung, die im achsennahen Bereich eine Strömungssenke aufweist, bewirkt. Durch die auftretende Zentrifugalkraft erfolgt eine Trennung der Partikel in dem hohlkegelartig oder trichterartig ausgebildeten Bodenteil 2. Diese Anordnung ist mit dem besonderen Vorteil verbunden, daß über das Tauchrohr 3 eine weitgehend von Partikeln freie Flüssigkeit angesaugt wird, so daß die Pumpe beim Betrieb kaum einem mechanischen Verschleiß durch in der angesaugten Flüssigkeit befindliche Partikel unterworfen wird.

Nach Patentanspruch 2 ist es auch vorteilhaft, den Flüssigkeitsabzug über das Tauchrohr 3 nach unten und dann über Seitenabzug 4 aus dem Bodenteil (Konus) 2 herauszuführen, wobei sich die Ansaugöffnung des Tauchrohres 3 am oberen Ende des Tauchrohres befindet.

Die vorteilhafte Ausgestaltung nach dem Patentanspruch 3 ermöglicht beim Inbetriebnehmen oder Wiederinbetriebnehmen von Mischer-, Absetzer-Vorrichtungen, Kolonnen, Reaktoren o.dgl., bei denen partikelhaltige Flüssigkeiten behandelt werden oder im Verlaufe von chemischen Umsetzungen entstehen, ein sicheres Entfernen von aufgetretenen Verstopfungen im Bodenteil durch einen einfachen Spülvorgang mittels der zusätzlichen Leitung 7.

0195826

Nach Patentanspruch 4 kann vorteilhaft im Bereich von Tauchrohr 3 oder oberhalb von Tauchrohr 3 in der Vorrichtung ein Umlenkelement 9, z.B. in Form eines mit seiner konkaven Seite nach unten gerichteten flachen Hohlkegels, eines ebenen, kreisförmigen, horizontal oder schräg befestigten Bodens, derart angeordnet sein, daß ein Ringspalt oder Durchlaß zwischen dem Umlenkelement 9 und der Wand der Vorrichtung zur Ermöglichung von Flüssigkeitsdurchtritt verbleibt.

In weiterer vorteilhafter Ausgestaltung kann das Umlenkelement 9 eine zentrale Öffnung oder auch sonstige Durchbrechungen aufweisen.

Durch die axiale Komponente der mittels mindestens einer der Leitungen 6 eingeleiteten Kreislauf-Flüssigkeitsstrahlströme wird ein nach unten gerichteter Strom induziert, der im unteren Bereich des Bodenteils 2 (Konusses) wieder nach oben umgelenkt wird und um das Zentralrohr 3 vorbeiströmt. Dieser Strom enthält aufgrund der gleichzeitig stattfindenden Rotation um die vertikale Achse und der dadurch wirkenden Zentrifugalkraft wenig Partikel. Es ist vorteilhaft, diesen Aufwärtsstrom mittels des Umlenkelementes 9 wieder nach unten umzulenken, wodurch eine Verringerung der Partikelkonzentration im Bodenteil und auch ein beachtlicher Anstieg der Suspensionsgeschwindigkeit am Behälterboden erreicht werden mit der Folge, daß die Gefahr des Absetzens von Partikeln am Behälterboden vermindert wird.

Zwischen dem Umlenkelement 9 und der Behälterwand verbleiben Durchlässe zum Durchtritt von partikelhaltiger Flüssigkeit in den Bodenteil oder Konus 2.

In Figur 1 ist der zylindrische Teil 1 eines Mischers, Absetzers o.dgl. mit dem Bodenteil 2, dem Tauchrohr 3, dem Seitenabzug 4, der Pumpe und den schräg nach unten gerichteten tangentialen Zuleitungen 6, der Entleerungsleitung 8 sowie einer Flüssigkeitszuführungsleitung dargestellt.

Figur 2 zeigt einen Schnitt durch den Behälter nach Figur 1 längs der Linie A-B.

Figur 3 zeigt einen Mischer, Absetzer o.dgl. mit Rührer, zylindrischem Behälterteil 1, Konus 2, der über ein zylindrisches Zwischenstück mit dem Behälterboden verbunden ist, Flüssigkeitszuführungsleitung, dem Tauchrohr 3, dem Seitenabzug 4, der über eine Pumpe in die Zuleitung 6 einmündet, und Entleerungsleitung 8.

In Figur 4 sind das Umlenkelement 9 in Form eines mit seiner konkaven Seite nach unten gerichteten flachen Hohlkegels, der an seinem äußeren Umfang einen Ringspalt zur Behälterwandung freiläßt, sowie - wahlweise - zusätzliche Leitungen für Rücklauf und zur Ausschleusung eines partikelarmen Ablaufstromes gezeigt.

In Figur 5 ist eine Mischer-Absetzer-Ausführung für sedimentierende Suspensionen in einem nicht gerührten Behälter mit einer zusätzlichen, mit einem Ventil bestückten Leitung zwischen dem druckseitigen Teil der Flüssigkeitspumpe und der Entleerungsleitung 8 gezeigt. Am Kopf des Mischers-Absetzers befindet sich ein Überlauf für die geklärte Flüssigkeit.

In Figur 6 ist eine Stoffaustauschkolonne für partikelhaltige Flüssigkeiten mit dem vertikalen zylindrischen Teil 1, dem über ein hohlzylinderförmiges Zwischenstück

0195826

am Boden angeflanschten vertikalen Konus 2, einer Flüssigkeitszuführungsleitung, dem Tauchrohr 3, dem Seitenabzug 4 und der über eine Pumpe an derem druckseitigen Auslaß angeschlossenen mindestens einen Zuleitung 6, der Entleerungsleitung 8, dem Umlenkelement 9, einer weiteren vom druckseitigen Auslaß der Pumpe ausgehenden in die Kolonne führenden Rückführleitung, einer Leitung für Waschflüssigkeit, einer vom druckseitigen Auslaß der Pumpe ausgehenden Leitung zur Ausschleusung eines partikelarmen Ablaufstromes sowie einer von dieser Leitung abzweigenden und in die Entleerungsleitung 8 zurückführenden Leitung dargestellt. Am Kopf der Kolonne befindet sich ein Überlauf.

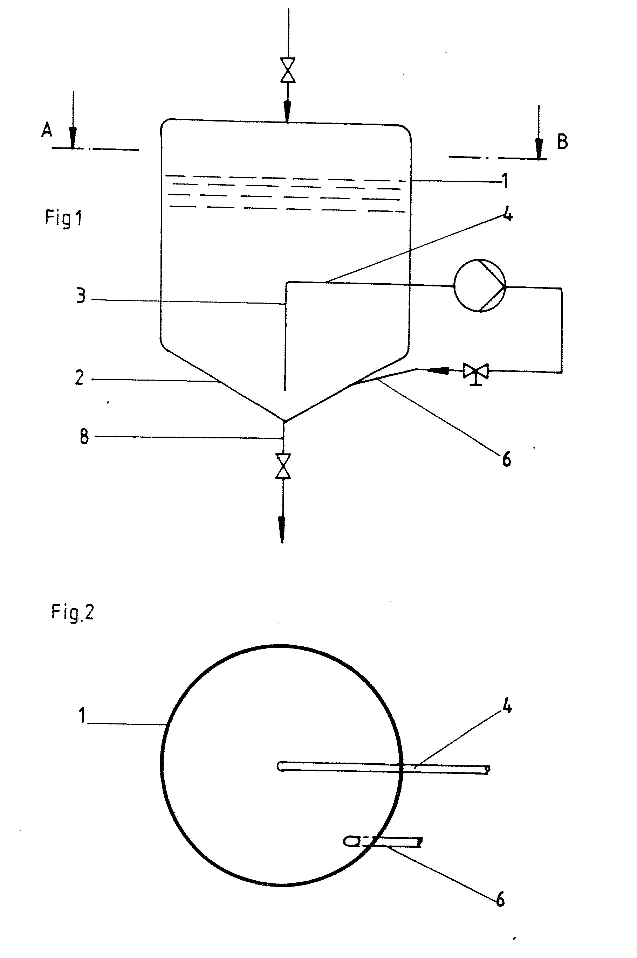

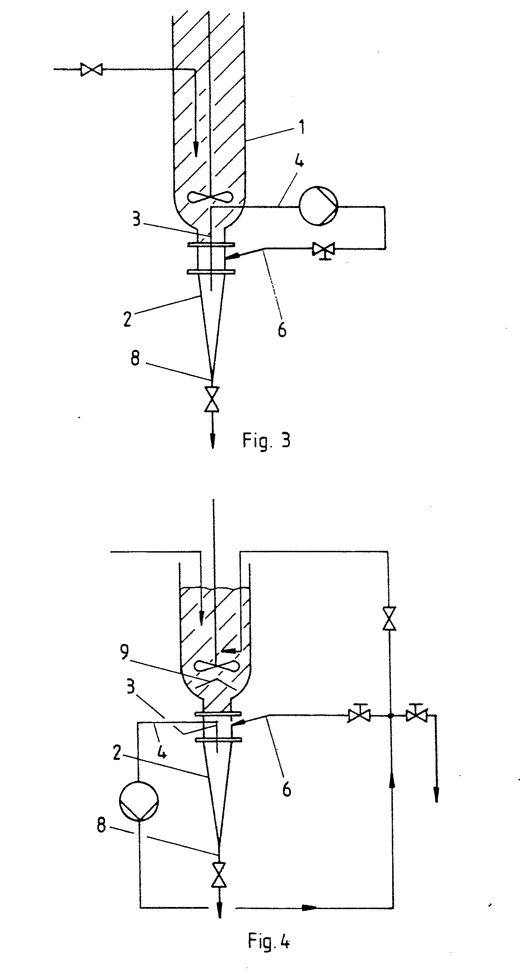

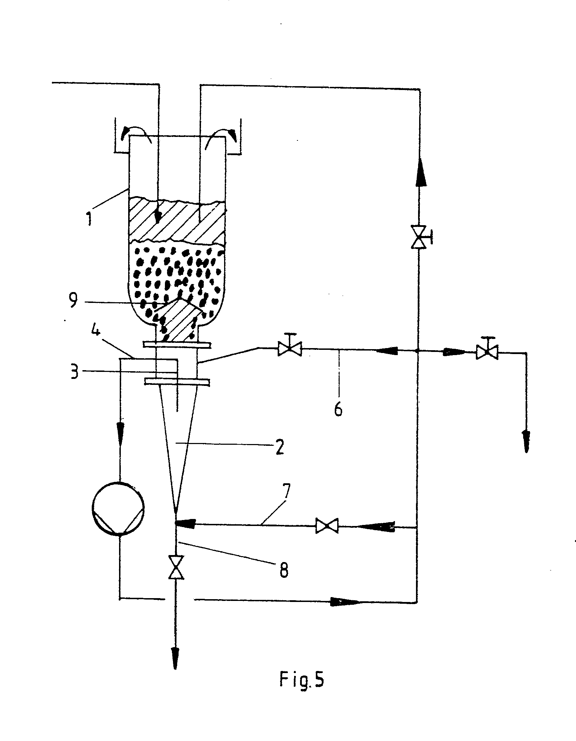

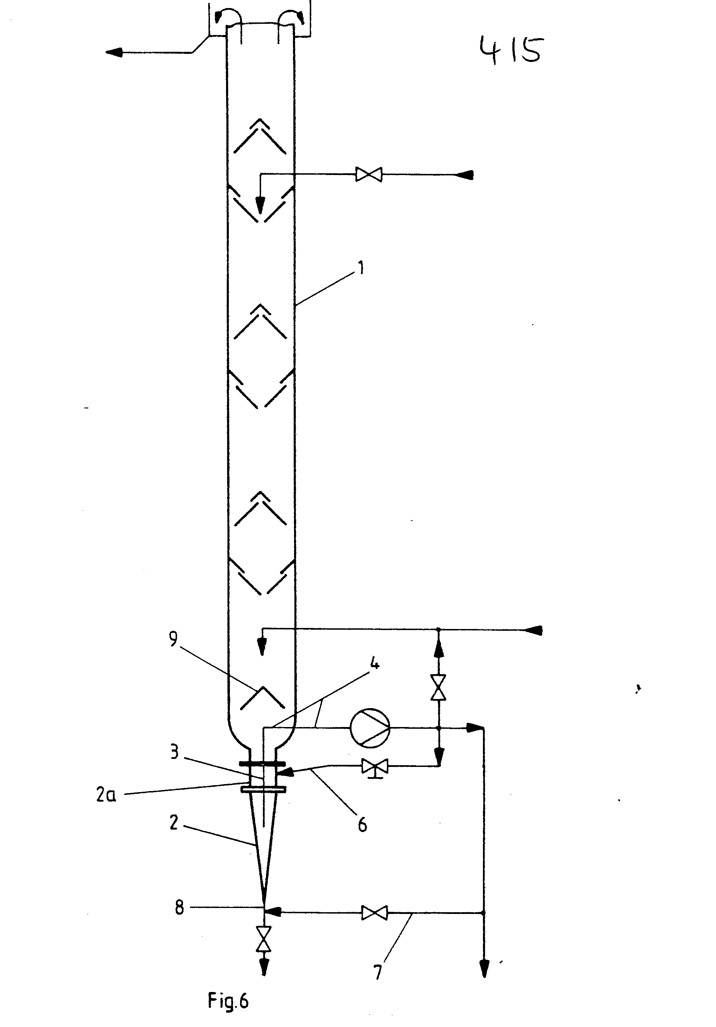

In den Ausführungen nach Figur 3 bis 6 setzt sich der Teil 2 nach Figur 1 aus dem Zwischenstück 2a und dem Konus 2b zusammen.

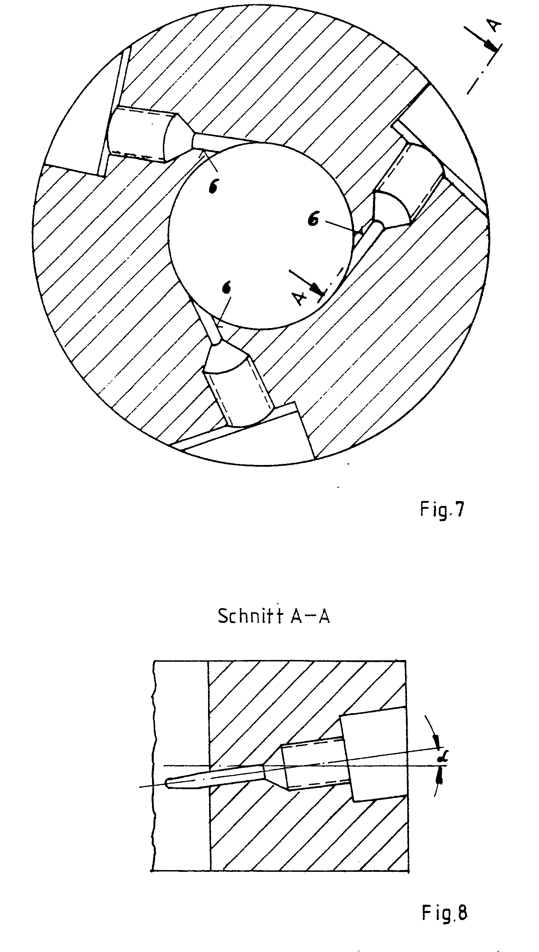

In Figur 7 sind in einem Querschnitt durch ein Bodenteil oder einen Konus 2 drei radialsymmetrisch angeordnete, schräg nach unten gerichtete Zuleitungen 6 sowie das Tauchrohr 3 zu erkennen.

Figur 8 zeigt einen Schnitt durch den Bodenteil 2 nach Figur 7 längs der Linie A-A mit dem Winkel $\alpha$ zwischen der Senkrechten zur Achse von Bodenteil 2 und den Zuleitungen 6.

Weitere Anwendungen und Schaltungen der vorgeschlagenen Mischer-Absetzer-Ausführungen, Kolonnen o.dgl. über die in den Figuren gezeigten Ausführungsbeispiele hinaus stehen dem Fachmann ohne weiteres zur Verfügung. Interessante Anwendungsmöglichkeiten bieten sich insbesondere bei Kaskadenschaltungen der vorstehenden Mischer-Absetzer.

Köln, den 07.11.1985

0195826

# Patentansprüche

1. Mischer-, Absetzer-Vorrichtung o.dgl. für partikelhaltige Flüssigkeiten aus einem vertikalen zylindrischen Teil (1) und einem vertikalen trichterartigen Bodenteil oder Konus (2), der an das untere Ende des zylindrischen Teils anschließt, einer Flüssigkeitszuführungsleitung, einer Entleerungsleitung, mindestens einer Leitung zum Abzug von Flüssigkeit etwa in Höhe oder etwas unterhalb des Überganges von Teil (1) zu Teil (2) und mindestens einer Leitung zur tangentialen Wiedereinleitung dieser Flüssigkeit, dadurch gekennzeichnet, daß ein axiales Tauchrohr (3) mit Ansaugöffnung in einen aus dem zylindrischen Teil (1) der Vorrichtung herausgeführten Seitenabzug (4) einmündet, über den die mittels einer Pumpe abgezogene Flüssigkeit etwa in Höhe des Tauchrohres (3) oder auch unterhalb der Ansaugöffnung tangential und schräg zur Achse von Teil (2) gerichtet über mindestens eine Zuleitung (6) in die Vorrichtung wiedereingeleitet wird.

2. Vorrichtung nach Anspruch 1, dadurch gekennzeichnet, daß sich die Ansaugöffnung am oberen Ende von Tauchrohr (3) befindet und der Seitenabzug (4) vom unteren Ende des Tauchrohres (3) abgeht.

3. Vorrichtung nach Anspruch 1, dadurch gekennzeichnet, daß der Seitenabzug (4) über die Pumpe und eine zusätzliche Leitung (7) mit der Entleerungsleitung (8) verbunden ist.

4. Vorrichtung nach Anspruch 1, dadurch gekennzeichnet, daß im Bereich oder oberhalb des Tauchrohres (3) ein Umlenkelement (9) in Form eines mit seiner konkaven Seite nach unten gerichteten flachen Hohlkegels, eines

0195826

ebenen, horizontal oder schräg befestigten Bodens o.dgl. derart angeordnet ist, daß ein Ringspalt oder Durchlaß zwischen dem Umlenkelement (9) und der Wand der Vorrichtung für den Flüssigkeitsdurchtritt verbleibt.

5. Vorrichtung nach Anspruch 1, dadurch gekennzeichnet, daß der Winkel zwischen der Senkrechten zur Achse von Teil (2) und der Richtung der Wiedereinleitung der Flüssigkeit etwa 5 bis 60°, vorzugsweise 10 bis 30°, beträgt.

6. Vorrichtung nach Anspruch 5, dadurch gekennzeichnet, daß das Umlenkelement (9) eine zentrale Öffnung oder auch sonstige Durchbrechungen aufweist.

0195826

Fig 1

A

B

1

4

3

2

8

6

Fig.2

1

4

6

0195826

215

Fig. 3

Fig. 4

Fig.5

0195826

415

Fig.6

0195826

5/5

Fig.7

Schnitt A—A

Fig.8

# EUROPÄISCHER RECHERCHENBERICHT

0195826

Nummer der Anmeldung

EP 85 10 1948

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-C- 827 647 (E. FEIFEL) <br> * Seite 1, Zeilen 1-5; Seite 2, Zeilen 55-78 * | 1 | B 01 F 1/00 <br> B 01 D 21/24 <br> B 01 D 21/26 |
| A | US-A-2 473 297 (H.C. PARKER) <br> * Spalte 5, Zeilen 20-34 * | 1,3 | |
| A | FR-A-1 193 397 (COMPAGNIE DESEAUX ET DE L'OZONE) <br> * Seite 2, linke Spalte, Zeilen 22-38; Seite 2, rechte Spalte * | 1 | |
| A | FR-A-1 008 645 (J. GACHOT) | | |
| A | US-A-3 939 005 (D.R. WHITE) | | |
| A | GB-A-1 194 748 (INTERNATIONAL BUSINESS MACHINES CORP.) | | |

RECHERCHIERTE SACHGEBIETE (Int. Cl.4)

B 01 F
B 01 D
C 02 F
F 16 L

Der vorliegende Recherchenbericht wurde für alle Patentansprüche erstellt.

| Recherchenort | Abschlußdatum der Recherche | Prüfer |
|---|---|---|
| DEN HAAG | 20-11-1985 | DE PAEPE P.F.J. |